# EUROPEAN PATENT SPECIFICATION

(11) **EP 0 756 518 B1**
(45) Date of publication and mention of the grant of the patent: **03.06.1998**
(21) Application number: 95915714.0
(22) Date of filing: 21.04.1995
(51) Int. Cl.: B01J 27/198

(54) **PROCESS FOR THE PREPARATION OF VANADIUM-PHOSPHORUS CATALYSTS AND USE THEREOF FOR THE PRODUCTION OF MALEIC ANHYDRIDE**
VERFAHREN ZUR HERSTELLUNG VON VANADIUM-PHOSPHORKATALYSATOREN UND DEREN VERWENDUNG ZUR ERZEUGUNG VON MALEINSÄUREANHYDRID
PROCEDE DE PREPARATION DE CATALYSEURS A BASE DE VANADIUM/PHOSPHORE, ET LEUR UTILISATION DANS LA PRODUCTION D'ANHYDRIDE MALEIQUE

(30) Priority: 22.04.1994 BE 9400418
(43) Date of publication of application: 05.02.1997
(73) Proprietor: PANTOCHIM S.A., 7181 Feluy (BE)
(72) Inventor: NSUNDA, Kinkela, B-5000 Namur (BE); RUGGIERI, Roberto, I-20146 Milano (IT)
(74) Representative: Schmitz, Yvon
(86) International application number: BE9500039
(87) International publication number: WO9529006

(56) References cited:
- EP-A- 0 151 912
- US-A- 4 435 521
- US-A- 5 137 860

## Description

### FIELD OF THE INVENTION

This invention relates to a method of producing vanadium-phosphorus mixed oxide catalyst for the manufacture of maleic anhydride. More particular the present invention provides a process for producing mature, active catalysts suitable for commercial production of maleic anhydride by oxidation of aliphatic hydrocarbons in the vapor phase.

### BACKGROUND OF THE INVENTION

Maleic anhydride is a substantial commercial product made throughout the word for over fifty years. It is used alone or in combination with other materials mostly as a precursor for other products, including resins, pharmaceuticals and food additives.

About a thousand articles and patents have been published related to the vanadium phosphorus oxides catalysts since Bergman et al, U.S. Pat. N° 3,293,268, taught the process of oxidizing saturated aliphatic hydrocarbons to produce maleic anhydride using such catalysts, often referred to as mixed oxides of vanadium and phosphorus. Bulk analysis of the active, mature catalyst shows the catalyst to be generally crystalline vanadyl pyrophosphate. However, as yet there are many factors not clearly understood that are important to the making of active, mature catalysts giving commercially acceptable productivities, yields and lives.

Numerous methods of making the vanadium-phosphorus oxide catalysts with and without promoters are disclosed and taught in the prior art. Generally, such catalysts are made by contacting suitable vanadium compounds under conditions which result in the vanadium being in the +4 valence, and reacted with the phosphorus to form a catalyst precursor consisting essentially of hydrated vanadyl hydrogen phosphate. The catalyst precursor is subsequently recovered by techniques well known in the art, such as drying, filtering and centrifuging, and treated physically and thermally by several conventional practices to form "calcined" mature catalysts.

The methods used for the calcination of the catalyst precursor may be divided into two broad categories : 1) calcination performed in equipment other than the reactor (external calcination) and 2) calcination in the reactor tubes, under hydrocarbon and air, usually mild operating conditions (in-situ calcination). An external calcination method which results in a good, competitive catalyst has many advantages over the in-situ procedure. Firstly, productive capacity is lost,usually for weeks, during the in-situ calcination operating at below normal feed concentrations and throughput. Secondly, since the calcination procedure is a most sensitive operation which, if done improperly, results in inferior catalysts, the total reactor charge is put at risk in the in-situ calcination procedure, since the whole catalyst charge is calcined at the same time. The external calcination has the advantage of calcining the catalyst in smaller increments, resulting not only in lower risk of inferior catalyst charged to the commercial reactor, but allowing known procedures for measuring and controlling the quality of the catalyst. Better performance in yield, productitivy and life results.

Prior art teaches procedures for both in-situ and external calcination. In both methods the ultimate form of the mature catalyst, in the bulk, is crystalline vanadyl pyrophosphate with various degrees of activity and selectivity for the production of maleic anhydride. Usually in the in-situ method the catalyst in the precursor form is charged to the reactor and brought up to reacting conditions using a feed of hydrocarbon and air. After several days or weeks of producing maleic anhydride at low rate, the precursor is converted to the active vanadyl pyrophosphate with the bulk of the vanadium very close to a valence of +4.

Generally, in the external calcination procedures, the prior art teaches that the catalyst be partially oxidized during the calcination. For reason not totally understood, partial oxidation of vanadium is required to make catalysts with high performance. Vanadium oxidation levels of above 4.0 and below 4.8 are considered favorable. The external calcination procedures described in prior art are varied, using batch and continuous thermal systems. Gaseous atmospheres are controlled in many cases. Gaseous atmospheres containing a combination or mixture of hydrocarbon and oxygen are usually not used, because of the difficulty in controlling the exothermal oxidation.

U.S. Patent N° 5,137,860 teaches a process for conversion of vanadium-phosphorus catalyst precursors to active catalysts by subjecting the catalyst precursors to elevated temperatures in three stages : (a) an initial heat-up stage in an atmosphere of air, steam and nitrogen , (b) a rapid heat-up stage at a programmed heat-up rate in an air/steam atmosphere and (c) a maintenance-finishing stage, using consecutively an oxygen containing and a non-oxidizing atmosphere.

U.S. Patent N° 4,562,268 relates to a process for the production of maleic anhydride by oxidation of aliphatic hydrocarbons in the vapor phase using phosphorus-vanadium mixed oxide catalysts. The catalysts employed are normally prepared by introducing pentavalent vanadium compounds into an alcohol capable of reducing the vanadium and contacting the mixture with alcohol modifying agents. The patent discloses two basic modes of calcination : (1) air calcination and (2) nitrogen/steam calcination. In the air calcination the catalyst precursors are subjected to heating in air, as in one embodiment, to 400°C over a two hour period, then holding at this temperature for six hours. In the nitrogen/steam calcination the catalyst precursors are first calcined in air at temperature in the range from 325°C to 350°C for six hours, followed by calcination in nitrogen and steam at a temperature in the range from 250°C to 600°C for from two to ten hours. The nitrogen/steam calcination is preferred.

U.S. Patent N° 4,392,986 discloses a process for preparing vanadium-phosphorus catalysts by reaction in isobutanol followed by water washing of the precursors. The precursors, after drying at 120°C to 140°C, are activated in the reactor oxidizing butane in air to maleic anhydride, typifying the in-situ calcination type.

U.S. Patent N^{o} 4,336,198 relates to vanadium-phosphorus catalysts modified with uranium, in which the precursors are supported on inert porous media such as alundum shapes. Calcining of the coated particles is disclosed as "heating from 200°C to 400°C at a rate of 5°/minute with heating at 400°C for one hour".

U.S. Patent N° 4,317,777 teaches the production of maleic anhydride using a vanadium-phosphorus catalysts by oxidizing a mixture which comprises a hydrocarbon of at least 4 linear carbon atoms and an oxygen containing gas, which compositions are above the flammable limit. All of the catalysts described in the 18 examples were calcined as typified by the description : "The catalyst was calcined in-situ by heating to 385°C at a rate of 9°/minute, whilst a 1.5% v/v n-butane/air mixture flowed through the bed at a GHSV of 1000 hr⁻¹". After several hundred hours of the operation the performances of the catalysts were evaluated.

U.S. Patent N° 4,315,864 teaches a process for preparing catalysts useful in the production of dicarboxylic acid anhydrides comprising the steps of :
(a) introducing a pentavalent vanadium-containing compound into an olefinic, oxygenated organic liquid-containing liquid medium ;
(b) effecting reduction of at least a portion of said vanadium to a valence state of +4 ;
(c) adding a phosphorus-containing compound to said medium to form a catalyst precursor precipitate ;
(d) recovering the catalyst precursor precipitate ;
(e) drying the catalyst precursor precipitate ;
(f) calcining the catalyst precursor precipitate.

The calcination procedure was typified by the description : "The catalyst precursor was then tabletted with 1% graphite being added, in a Buechler press to 1 1/8 inch. diameter. The tablets were then calcined in air from 150°C to 400°C at a rate of 5°C per minute, being held at 400°C for 1 hour".

These and many other references teach various methods of calcining the vanadium-phosphorus precursor to produce catalysts which in turn produce maleic anhydride with more or less efficiency. The prior art does not teach the benefit of a slow heat up rate above the temperature which will not substantially oxidize the residual organic materials arising from the organic media used, nor does the prior art teach that the slow heat up rate of preferred range of the instant invention, from 150°C to 550°C produces catalysts improved in activity, productivity and yield. On the contrary, the procedures, in which rate of heating is mentioned, and/or programmed, teach increasing the temperature at 2°C/minute or higher.

### SUMMARY OF THE INVENTION

This invention is directed providing a process for the preparation of oxidation catalysts containing the mixed oxides of vanadium and phosphorus having improved activity and yield in the oxidation of 4-carbon hydrocarbons to maleic anhydride.

The above object is attained by the instant invention in a process entailing transformation of a precursor prepared using a non-aqueous solvent system, referred herein also as an organic solvent or an organic media, in the reduction, reaction and precipitation into vanadyl pyrophosphate active catalyst, which process comprises :
(a) contacting a phosphorus compound and vanadium compound in an organic solvent under conditions which will provide a catalyst precursor having a phosphorus to vanadium atom ratio between 0.9 to 1.4, and having more than 90 atom percent of the vanadium in the tetravalent state ;
(b) recovering the precursor ;
(c) drying the precursor, limiting the maximum temperature in an oxygen-containing atmosphere, to a value which will not allow any substantial oxidation of the residual organic materials ;
(d) providing an atmosphere selected from the group consisting of air, steam, inert gases and mixtures thereof, and calcining the precursor, in said atmosphere, by raising the temperature, as measured in the precursor, above that attained in step (c) at a rate of less than 1°C per minute to a temperature greater than 350°C, but no greater than 550°C, and maintaining the temperature for a time effective in giving a vanadium oxidation state no greater than +4.5 and in completing the conversion to generate an active catalyst.

### DETAILED DESCRIPTION OF THE INVENTION

The process of this invention provides an added dimension of efficiency and reproducibility to the preparation of vanadyl pyrophosphate catalysts that use the non-aqueous solvent procedure for the making of the vanadium-phosphorus oxide precursor with or without modifying components. The catalysts, when made in accordance with the process of the present invention, give higher yields and activities than those made in accordance with previously taught technology (see U.S. Patent 5,137,860), because the rate of heating used during activation is less than 2°C per minute.

The preparation of precursors using an organic solvent as the reaction medium is well known in the art. Specific examples of suitable catalyst precursors are described in several patents and publications [U.S. Patents Nos 4,632,915, 4,562,268, 4,333,853, 4,315,864, 4,132,670, 4,064,070 ; J. W. Johnson et al., J. Am. Chem. Soc., 106, 8123 (1984) ; F. Cavani et al., Appl. Catal., 9, 191 (1984) ; H. S. Horowitz et al., Appl. Catal., 38 193 (1988) ; R. S. K. Bej et al., Appl. Catal., 83, 149 (1992) ; R. Sant et al., J. Catal., 143, 215 (1993)]. It is understood that the references are not to be construed as limiting, but are for purposes of illustration and guidance in the practice of the instant invention.

Broadly described, the precursor/catalysts of this invention are prepared by contacting a phosphorus compound and vanadium compound in an organic solvent under conditions which will provide a catalyst precursor having a phosphorus to vanadium atom ratio between 0.9 to 1.4, and having greater than 90 atom percent of the vanadium in the tetravalent state. The catalyst precursors are recovered, dried and formed into structures for multi-tubular reactors, or sized for use in fluidized and transport reactors ; or alternately, recovered, dried and calcined before forming into structures or sizing. Thereafter these catalyst precursors are heat-treated by drying and calcining in accordance with the instant invention to obtain an active vanadyl pyrophosphate.

The vanadium compounds useful as source of vanadium in the catalyst precursors are well known in the art. Suitable vanadium compounds include but are not limited to : vanadium oxides, such as vanadium pentoxide or vanadium tetroxide ; vanadium oxyhalides, such as vanadyl chloride, vanadyl dichloride, vanadyl bromide and vanadyl dibromide ; vanadium salts, such as ammonium metavanadate, vanadyl sulfate, vanadyl phophate, vanadyl formate or vanadyl oxalate. Of these, however, vanadium pentoxide is preferred.

The phosphorus compounds also are well known in the art. Suitable phosphorus compounds include but are not limited to : phosphoric acids, such as ortho, meta phosphoric acids; phosphorus oxides, such as phosphorus pentoxide ; phosphorus halides, such as phosphorus oxychloride or phosphorus oxybromide ; phosphorus in the trivalent state, such as phosphorous acid, phosphorus trichloride or organic phosphites. Orthophosphoric acid and phosphorus pentoxide and mixtures thereof are preferred.

The organic liquid reaction medium may be used as a reducing agent for the vanadium, or an added agent may be used to reduce at least 90% of the vanadium to the +4 valence state upon addition of the vanadium or by heating. In addition the liquid medium should be a solvent for the phosphorus compound and be relatively unreactive towards the phosphorus compound, while preferably not being a good solvent for the vanadium compound or for the vanadium-phosphorus oxide precursor. Suitable liquid media for use in the invention are organic compounds such as alcohols, aldehydes, ketones, ethers and mixtures of the above. The organic liquid media used are usually substantially anhydrous. A preferred organic liquid consists of a mixture of anhydrous isobutanol and benzyl alcohol.

It is apparent to those skilled in the art that the catalyst precursor materials, once separated from the reaction media and dried, may be formed into suitably shaped structures for use in a maleic anhydride reactor. Techniques for configuring precursor powder for use as catalysts in fixed-bed, heat exchanger type reactors, fluidized-bed reactors and transport-bed reactors are well known to those skilled in the art. For example, the catalyst precursors may be tabletted or extruded for use in a fixed-bed reactor or comminuted as a powder for use in a fluidized-bed or transport-bed reactor.

The precursor may be supported on suitable carrier for use in any of the reactors. Representative carriers include, but are not limited to silica, alumina, silicon carbide, silica-alumina and titanium dioxide.

Minor amounts of metals, in the form of oxides or phosphates, are often included in vanadyl phosphate catalysts as promoters. Other modifiers may be added in some instances to change catalyst performances.

In the present invention the catalyst precursor is converted to the active catalyst through limiting the maximum temperature of the drying step, the rate of temperature increase in the calcination step and the atmosphere during the drying and calcination steps. The activation-conversion is critical to the preparation of the superior catalysts attendant with the instant invention. The invention accomplishes the critical activation-conversion by limiting the temperature during the drying stage and the rate of heating and the atmosphere in contact with the catalyst during the calcination stage.

In the drying stage the maximum temperature in an oxygen-containing atmosphere is limited to a value which will not allow the oxidation of the residual organic materials arising from the organic media used. A preferable maximum temperature range is from 150°C to 200°C for this stage. In the drying stage the volatile organic materials arising from the organic media used are removed with less than 50°C over-temperature (hot-spots) in the precursor, avoiding a rapid oxidation of the residual organic materials.

In the activation-conversion (calcination) stage the transformation is carried out by raising the temperature in a suitable atmosphere at a rate of less than 1°C per minute, minimizing the over-temperature (hot-spots) in the catalyst. Prior technology teaches that the activation-conversion stage (calcination) begins at a substantially higher temperature than 150°C to 200°C. However, remarkably, it has been discovered that, as opposed to prior teachings, a fast rate of heating from 150°C to 200°C adversely affects, in a significant manner, the performance of the resulting active catalyst.

Several sources teach the use of steam, oxygen and inert gas, the last two usually supplied by air, during the calcination of the precursor. It is well known that the steam is needed to gain the highest performances of the active catalysts. Also, it is well known in the art that the temperature, oxygen concentration, and time variables may be used to control the partial re-oxidation of the vanadium in the catalyst. In the instant invention the atmosphere concentrations of steam, inert gas and oxygen is controlled to provide a vanadium oxidation state from 4.0 to about 4.5, preferably from 4.05 to 4.2. In the preferred embodiment of the instant invention a single mixture of steam, inert gas and oxygen may be used, thus significantly simplifying the activation-conversion of the precursor to a commercially feasible procedure.

For the purpose of comparing the performance efficiencies of catalysts made pursuant with the instant invention with comparative technologies, the active catalyst forms may be tested using a variety of reactor types which are well known in the art. As in the instant invention the comparison is made by actually reacting a hydrocarbon, usually n-butane, as an admixture with air on a sample of catalyst in a single tube reactor. The measured performance variables include temperature of the heat exchange media of the reactor, conversion (usually one-pass conversion) of the feed hydrocarbon, yield of maleic anhydride based on the feed hydrocarbon.

Activity may be expressed by the level of conversion attained at a given temperature in the medieum surrounding the reactor. In the instant development the conversion of the butane feed at 400°C is used. The conversion at 400°C "bath" temperature may typically be from about 70% to 85% of the hydrocarbon feed, but often is lower or higher, the level of conversion reflecting the activity of the catalyst.

The yield of maleic anhydride is expressed as the moles of maleic anhydride produced from 100 moles of butane fed to the reactor. The commercial value of a catalyst may be judged by the two variables, yield and conversion. The yield is a direct measure of the raw material usage, while conversion at a given temperature is a direct measure of activity. Mathematically, the ratio of the yield and conversion is the selectivity, which is usually expressed as the moles of maleic anhydride formed per 100 moles of hydrocarbon reacted and is a measure of the chemical efficiency. Generally, a high activity (high conversions) will presage more flexibility in commercial operation and the possibility of a long catalyst life. Combined with high yields, it determines high selectivies and portends the capability of attaining low raw material usage.

In the comparative testing of the instant development, a volume of 50 ml of the catalyst is charged to a 21 mm diameter stainless steel reactor to an approximate depth of 180 mm and the reactor submerged in a liquid-mixed salt bath. The salt bath used is a mixture of potassium nitrate, sodium nitrate and sodium nitrite, the eutectic being the most commonly commercially used heat transfer medium. The feed concentration of n-butane in air employed is 1.5% by volume, with the gas volume hourly space velocity (GHSV) of 1400 volumes of gas per volume of catalyst at standard conditions.

### EXAMPLE 1

This example illustrates a suitable procedure for preparation of the catalyst precursor form.

A 10-liter, four-neck, round-bottom flask, fitted with a mechanical stirrer with a 15 cm teflon paddle, a thermometer, a heating mantle, and a reflux condenser, was charged with 6480 ml (5196 g) of isobutyl alcohol and 720 ml (750 g) of benzyl alcohol. Stirring was started (about 350 r.p.m.) and 670 g (3.7 moles) of vanadium pentoxide (V₂O₅) was added. The mixture was heated to reflux, about 107°C, and maintained at reflux for 3 hours. After the initial reflux period the stirred mixture is cooled to about 20°C below the reflux temperature and 816 g (8.3 moles) of freshly prepared phosphoric acid (106% H₃PO₄) was added. The resultant mixture was again heated to reflux and maintained at reflux for 16 hours. This mixture was cooled to about 50°C and suction filtered to yield a bright blue cake. The blue solid was transferred to four open 2-liter dish trays and dried in a forced-draft oven at 150°C for 10 hours to yield about 1300 g of a grey-blue catalyst precursor powder.

The resultant powder was passed with some pressing through a 65-mesh sieve, blended with approximately 4% by weight graphite, and 4 mm x 4 mm cylindrical tablets were formed in a Stokes-512 tabletting machine equipped with one die. The catalyst precursor tablets, thus prepared, were calcined under varying conditions as described in the following example and as shown in Table 1.

### EXAMPLE 2

This example describes the procedure used to compare the calcination procedures embodied in the instant invention as well as comparative examples.

A 100 ml portion of the catalyst precursor tablets of Example 1 were charged to a 50 mm diameter borosilicate tube and placed in a vertical Lindberg oven. Before starting the heating program, a mixture of gases (160 L/hr) was passed through the catalyst bed to provide the atmosphere of the composition shown in Table 1 in "Heating Stage 1". In the bulk of the runs a mixture of air/nitrogen was used containing 5% oxygen by volume. However, as is shown in Table 1, various concentrations of air/nitrogen were tested, as well as oxygen/CO₂. When the temperature of the tablets reached 150°C, Atmosphere 1 was replaced (if it was changed) by the various gas atmospheres designated in Table 1 in "Heating Stage 2", using the same flow of 160 L/hr. The temperature was thereafter increased at programmed rates, as indicated in Table 1, to 420°C and held constant at 420°C for the time shown in Table 1. At the end of the heating program, the atmosphere was replaced by a flow of nitrogen and the calcined tablets were cooled. The prepared catalysts were tested for performance as described heretofore.

Table 2 lists the performance results, % conversion, % yield and % selectivity, of the catalysts listed in Table 1.

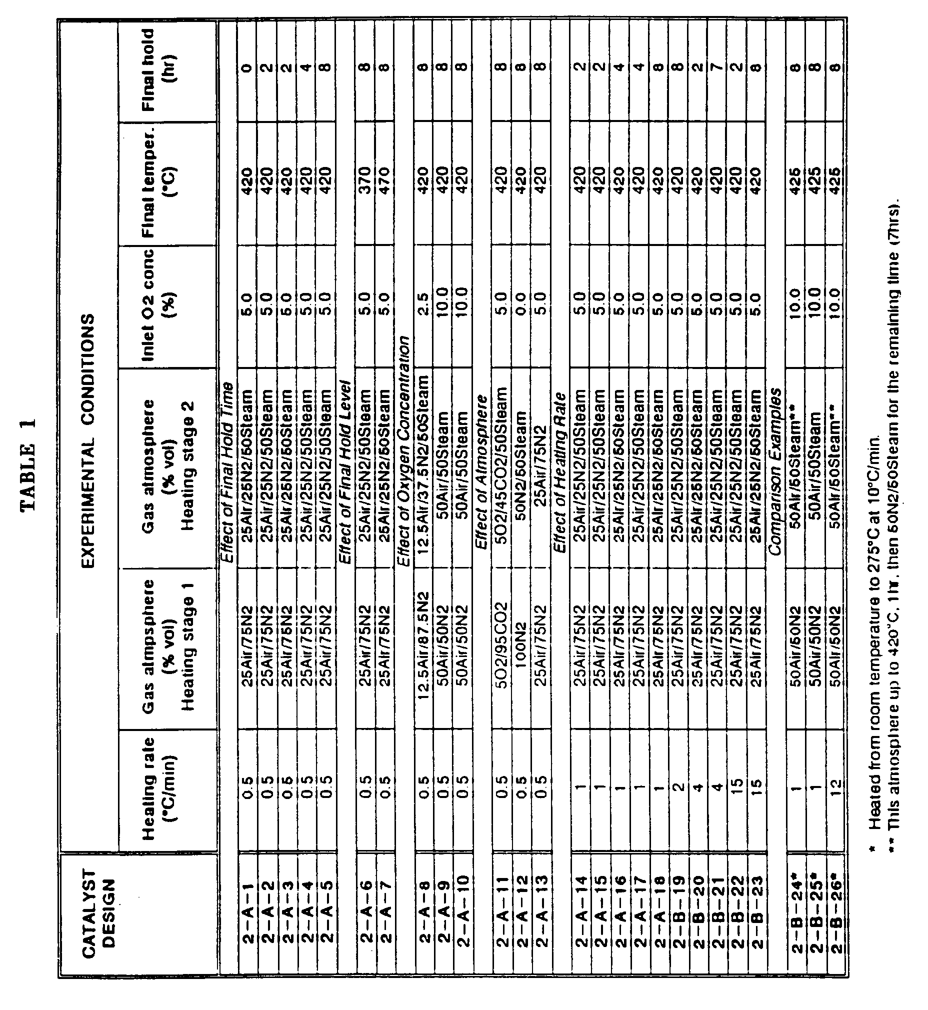

**TABLE 2**

| **CATALYST DESIGN** | **Heating rate (°C/min)** | **PERFORMANCES** | | |
|---|---|---|---|---|
| | | **Conver. (%)** | **Yield (%)** | **Select. (%)** |
| | | | | |

| *Effect of Final Hold Time* | | | | |
|---|---|---|---|---|
| **2-A-1** | 0.5 | 62 | 45 | 72 |
| **2-A-2** | 0.5 | 66 | 48 | 72 |
| **2-A-3** | 0.5 | 65 | 46 | 72 |
| **2-A-4** | 0.5 | 78 | 54 | 69 |
| **2-A-5** | 0.5 | 80 | 51 | 64 |

| *Effect of Final Hold Level* | | | | |
|---|---|---|---|---|
| **2-A-6** | 0.5 | 70 | 48 | 68 |
| **2-A-7** | 0.5 | 65 | 43 | 66 |

| *Effect of Oxygen Concentration* | | | | |
|---|---|---|---|---|
| **2-A-8** | 0.5 | 92 | 47 | 51 |
| **2-A-9** | 0.5 | 86 | 53 | 62 |
| **2-A-10** | 0.5 | 83 | 55 | 66 |

| *Effect of Atmosphere* | | | | |
|---|---|---|---|---|
| **2-A-11** | 0.5 | 67 | 29 | 43 |
| **2-A-12** | 0.5 | 14 | 03 | 24 |
| **2-A-13** | 0.5 | 64 | 39 | 61 |

| *Effect of Heating Rate* | | | | |
|---|---|---|---|---|
| **2-A-14** | 1 | 59 | 41 | 69 |
| **2-A-15** | 1 | 62 | 41 | 65 |
| **2-A-16** | 1 | 73 | 51 | 69 |
| **2-A-17** | 1 | 76 | 50 | 66 |
| **2-A-18** | 1 | 74 | 48 | 65 |
| **2-B-19** | 2 | 68 | 45 | 66 |
| **2-B-20** | 4 | 47 | 33 | 70 |
| **2-B-21** | 4 | 54 | 37 | 68 |
| **2-B-22** | 15 | 40 | 25 | 62 |
| **2-B-23** | 15 | 50 | 34 | 68 |

| *Comparison examples* | | | | |
|---|---|---|---|---|
| **2-B-24******* | 1 | 54 | 38 | 70 |
| **2-B-25******* | 1 | 49 | 33 | 67 |
| **2-B-26******* | 12 | 37 | 25 | 67 |

| | | | | |
|---|---|---|---|---|
| *Heated from RT to 275°C at 10°/min. | | | | |

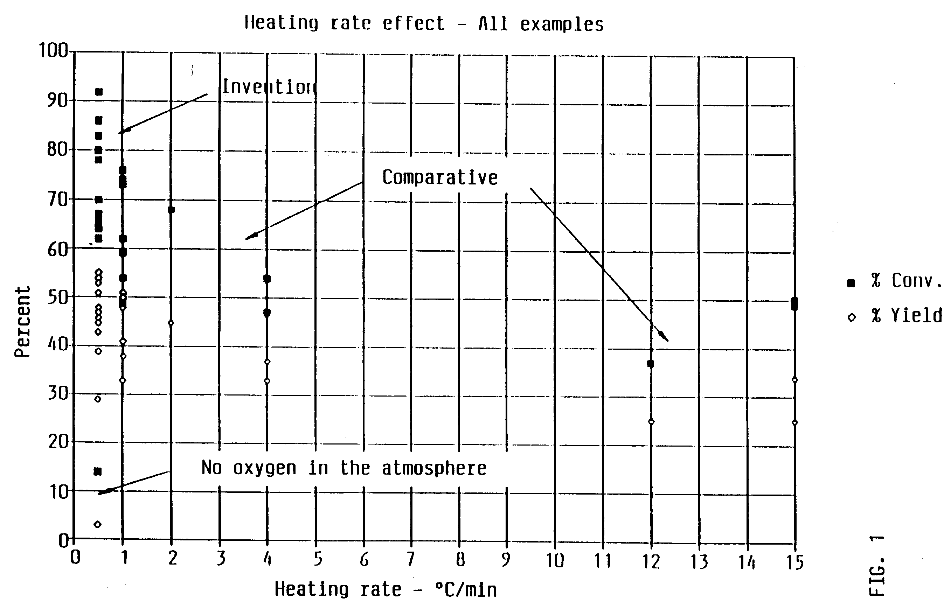

Fig. 1 is a plot of the conversions and yields obtained in the performance tests of all of the examples. Comparison of the conversion and yield levels shows that the catalysts prepared as taught in the instant invention show significantly better conversions and yields than the comparative examples. The performance of the active catalysts vary within the tested parameters (hold time, hold level, oxygen concentration, atmosphere, and heating rate), but all performance results of catalysts prepared according to the instant invention (all x-A-x catalysts) are significantly better than the results of the comparative examples (x-B-x). Example 2-A-12 shows the need for oxygen in the atmosphere to obtain a catalyst giving usable performance. While 2-B-24 and 2-B-25, prepared with the heating rate of the instant invention, have better performances than 2-B-26, prepared with a comparative heating rate, the former showed lower performance when made by heating to 275°C at a fast rate.

It is understood that the invention is not limited to the above embodiments and that changes may be made without departing from the invention as set out in the appended claims.

## Claims

1. A process for the preparation of oxidation catalysts containing mixed oxides of vanadium and phosphorus which comprises the steps of :
(a) contacting a phosphorus compound and a vanadium compound in an organic solvent under conditions which will provide a catalyst precursor having a phosphorus to vanadium atom ratio between 0.9 to 1.4, and having more than 90 atom percent of the vanadium in the tetravalent state ;
(b) recovering the precursor ;
(c) drying the precursor, limiting the maximum temperature, in an oxygen containing atmosphere, to a value which will not substantially oxidize the residual organic materials arising from the organic solvent used ;
(d) providing an atmosphere selected from the group consisting of air, steam, inert gases and mixtures thereof, and calcining the precursor, in said atmosphere, by raising the temperature, as measured in the precursor, above that attained in step (c) at a rate of less than 1°C per minute to a temperature greater than 350°C, but no greater than 550°C and maintaining the temperature for a time effective in giving a vanadium oxidation state no greater than +4.5 and in completing the conversion to generate an active catalyst.

2. The process of claim 1 wherein the maximum temperature of drying in Step (c) is lower than 250°C in an oxygen containing atmosphere.

3. The process of claim 1 wherein the maximum temperature of drying in Step (c) is 150°C to 200°C in an oxygen containing atmosphere.

4. The process of claim 1 wherein the rate of temperature increase in Step (d) is between 0.5°C/minute and less than 1°C/minute.

5. The process of claim 1 wherein the temperature of the precursor is increased in Step (d) to 350°C to about 450°C.

6. The process of claim 1 wherein the temperature of the precursor is increased in Step (d) to 375°C to about 430°C.

7. The process of claim 1 wherein the gas atmosphere in Step (c) contains a proportion of oxygen greater than 0 percent by volume but no greater than 15 percent by volume.

8. The process of claim 1 wherein the gas atmospheres in Step (c) and/or Step (d) contain a proportion of oxygen greater than 0 percent by volume but no greater than 15 percent by volume.

9. The process of claim 1 wherein the gas atmospheres in Step (c) and/or Step (d) contain a proportion of oxygen greater than 0 percent by volume but no greater than 10 percent by volume.

10. The process of claim 1 wherein the gas atmospheres in Step (c) and/or Step (d) contain oxygen at 5 percent by volume.

11. The process of claim 1 wherein the gas atmosphere in Step (d) contains a proportion of steam greater than 0 percent by volume but no greater than 75 percent by volume.

12. The process of claim 1 wherein the gas atmosphere in Step (d) contains a proportion of steam greater than 0 percent by volume but no greater than 50 percent by volume.

13. The process of claim 1 wherein the gas atmosphere in Step (d) contains steam at about 50 percent by volume.

14. The process of claim 1 wherein the recovered precursor in Step (b) is formed into structures for multi-tubular reactors before drying step c) and calcination step d).

15. The process of claim 1 wherein the recovered precursor in Step (b) is sized for use in fluidized and transport reactors before drying step c) and calcination step d).

16. The process of claim 1 wherein the recovered precursor in Step (b) is dried and calcined before forming into structures for multi-tubular reactors.

17. The process of claim 1 wherein the recovered precursor in Step (b) is dried and calcined before sizing for use in fluidized or transport reactors.

18. A phosphorus-vanadium mixed oxide hydrocarbon oxidation catalyst made by the process of any of claims 1-17.

19. A process for the production of maleic anhydride by the oxidation of an aliphatic hydrocarbon with molecular oxygen or a molecular oxygen containing gas in the vapor phase at a temperature of from 300°C to 550°C in the presence of a phosphorous-vanadium mixed oxide catalyst, with and without modifying components, wherein the catalyst is prepared by the steps of :
(a) contacting a phosphorus compound and a vanadium compound in an organic solvent under conditions which will provide a catalyst precursor having a phosphorus to vanadium atom ratio between 0.9 to 1.4, and having more than 90 atom percent of the vanadium in the tetravalent state ;
(b) recovering the precursor ;
(c) drying the precursor, limiting the maximum temperature, in an oxygen containing atmosphere, to a value which will not substantially oxidize the residual organic materials arising from the organic solvent used ;
(d) providing an atmosphere selected from the group consisting of air, steam, inert gases and mixtures thereof ; and calcining the precursor, in said atmosphere, by raising the temperature, as measured in the precursor, above that attained in step (c) at less than 1°C per minute to a temperature greater than 350°C, but no greater than 550°C and maintaining the temperature for a time effective in giving a vanadium oxidation state no greater than +4.5 and in completing the conversion to generate an active catalyst.

20. The process of claim 19 wherein the maximum temperature of drying in Step (c) is lower than 250°C in an oxygen containing atmosphere.

21. The process of claim 19 wherein the maximum temperature of drying in Step (c) is from 150°C to 200°C in an oxygen containing atmosphere.

22. The process of claim 19 wherein the rate of temperature increase in Step (d) is between 0.5°C/minute and less than 1°C/minute.

23. The process of claim 19 wherein the temperature of the precursor is increased in Step (d) to 350°C to about 450°C.

24. The process of claim 19 wherein the temperature of the precursor is increased in Step (d) to 375°C to 430°C.

25. The process of claim 19 wherein the gas atmosphere in Step (c) contains a proportion of oxygen greater than 0 percent by volume but no greater than 15 percent by volume.

26. The process of claim 19 wherein the gas atmospheres in Step (c) and/or Step (d) contain a proportion of oxygen greater than 0 percent by volume but no greater than 15 percent by volume.

27. The process of claim 19 wherein the gas atmospheres in Step (c) and/or Step (d) contain a proportion of oxygen greater than 0 percent by volume but no greater than 10 percent by volume.

28. The process of claim 19 wherein the gas atmospheres in Step (c) and/or Step (d) contain oxygen at 5 percent by volume.

29. The process of claim 19 wherein the gas atmosphere in Step (d) contains a proportion of steam greater than 0 percent by volume but no greater than 75 percent by volume.

30. The process of claim 19 wherein the gas atmosphere in Step (d) contains a proportion of steam greater than 0 percent by volume but no greater than 50 percent by volume.

31. The process of claim 19 wherein the gas atmospheres in Step (d) contain steam at about 50 percent by volume.

32. The process of claim 19 wherein the recovered precursor in Step (b) is formed into structures for multi-tubular reactors before drying step c) and calcination step d).

33. The process of claim 19 wherein the recovered precursor in Step (b) is sized for use in fluidized and transport reactors before drying step c) and calcination step d).

34. The process of claim 19 wherein the recovered precursor in Step (b) is dried and calcined before forming into structures for multi-tubular reactors.

35. The process of claim 19 wherein the recovered precursor in Step (b) is dried and calcined before sizing for use in fluidized and transport reactors.

## Patentansprüche

1. Verfahren zur Herstellung von Oxidationskatalysatoren, die gemischte Oxide von Vanadium und Phosphor enthalten, wobei das Verfahren folgende Schritte aufweist:
a) Kontaktieren einer Phosphorverbindung und einer Vanadiumverbindung in einem organischen Lösungsmittel unter Konditionen, die einen Katalytvorläufer liefern, der ein Phosphor zu Vanadium Atomverhältnis zwischen 0,9 bis 1,4 aufweist und mehr als 90 Atomprozent von Vanadium im tetravalenten Zustand aufweist;
b) Zurückgewinnen des Vorläufers;
c) Trocknen des Vorläufers, Begrenzen der Höchsttemperatur in einer Sauerstoff enthaltenden Atmosphäre auf einen Wert, der nicht wesentlich die übriggebliebenen organischen Materialien oxidiert, die aus dem benutzten organischen Lösungsmittel stammen;
d) Vorsehen einer Atmosphäre ausgewählt aus der Gruppe bestehend aus Luft, Dampf, Inertgasen und deren Mischungen, Kalzinieren des Vorläufers in der genannten Atmosphäre durch Anheben der Temperatur, wie im Vorläufer gemessen über diejenige, der er im Schritt c) ausgesetzt war, in einer Rate von weniger als 1°C pro Minute bis zu einer Temperatur höher als 350°C, aber nicht größer als 550°C, und Aufrechterhalten der Temperatur über einen Zeitraum der wirksam ist, um einen Vanadiumoxidationsstatus nicht größer als +4,5 zu geben und um die Umwandlung zu komplettieren, um einen aktiven Katalysator zu erzeugen.

2. Verfahren nach Anspruch 1, bei dem die maximale Temperatur der Trocknung im Schritt c) niedriger als 250°C ist in einer Sauerstoff enthaltenden Atmosphäre.

3. Verfahren nach Anspruch 1, bei dem die maximale Temperatur der Trocknung im Schritt c) 150°C bis 200°C in einer Sauerstoff enthaltenden Atmosphäre beträgt.

4. Verfahren nach Anspruch 1, bei dem die Rate des Temperaturanstieges im Schritt d) zwischen 0,5°C/Minute und weniger als 1°C/Minute beträgt.

5. Verfahren nach Anspruch 1, bei dem die Temperatur des Vorläufers im Schritt d) angehoben wird auf 350°C bis ungefähr 450°C.

6. Verfahren nach Anspruch 1, bei dem die Temperatur des Vorläufers angehoben wird im Schritt d) auf 375°C bis ungefähr 430°C.

7. Verfahren nach Anspruch 1, bei dem die Gasatmosphäre im Schritt c) einen Anteil an Sauerstoff enthält größer als 0 Vol.-%, aber nicht größer als 15 Vol.-%.

8. Verfahren nach Anspruch 1, bei dem die Gasatmosphäre im Schritt c) und/oder im Schritt d) einen Anteil an Sauerstoff enthält größer als 0 Vol.-%, aber nicht größer als 15 Vol.-%.

9. Verfahren nach Anspruch 1, bei dem die Gasatmosphäre im Schritt c) und/oder im Schritt d) einen Anteil an Sauerstoff enthält größer als 0 Vol.-%, aber nicht größer als 10 Vol.-%.

10. Verfahren nach Anspruch 1, bei dem die Gasatmosphäre im Schritt c) und/oder im Schritt d) Sauerstoff enthält von 5 Vol.-%.

11. Verfahren nach Anspruch 1, bei dem die Gasatmosphäre im Schritt d) einen Anteil an Dampf enthält größer als 0 Vol.-%, aber nicht größer als 75 Vol.-%.

12. Verfahren nach Anspruch 1, bei dem die Gasatmosphäre im Schritt d) einen Anteil an Dampf enthält größer als 0 Vol.-%, aber nicht größer als 50 Vol.-%.

13. Verfahren nach Anspruch 1, bei dem die Gasatmosphäre im Schritt d) Dampf enthält von ungefähr 50 Vol.-%.

14. Verfahren nach Anspruch 1, bei dem der zurückgewonnene Vorläufer im Schritt b) in Strukturen für Multirohrreaktoren vor dem Trockenschritt c) und dem Kalzinierungsschritt d) geformt wird.

15. Verfahren nach Anspruch 1, bei dem der zurückgewonnene Vorläufer in Flüssigspaltstoff- und Transportreaktoren vor dem Trocknungsschritt c) und dem Kalzinierungsschritt d) für den Gebrauch in Wirbelschicht- und Transportreaktoren der Größe nach geordnet wird.

16. Verfahren nach Anspruch 1, bei dem der zurückgewonnene Vorläufer im Schritt b) vor der Formung in Strukturen für Multirohrreaktoren getrocknet und kalziniert wird.

17. Verfahren nach Anspruch 1, bei dem der zurückgewonnene Vorläufer im Schritt b) vor der Größensortierung zum Gebrauch in Wirbelschicht- oder Transportreaktoren getrocknet und kalziniert wird.

18. Phosphor-Vanadium-gemischter Hydrocarbonoxid-Oxidationskatalysator, hergestellt nach dem Verfahren nach einem der vorangehenden Ansprüche 1 bis 17.

19. Verfahren zur Herstellung von Maleinsäureanhydride durch die Oxidation eines alphatischen Hydrocarbons mit molekularem Sauerstoff oder einem molekularen Sauerstoff enthaltenden Gas in der Dampfphase bei einer Temperatur von 300°C bis 550°C in der Anwesenheit eines Phosphor-Vanadium-gemischten Oxidationskatalysators, mit oder ohne modifizierender Komponenten, bei dem der Katalysator hergestellt wird nach folgenden Schritten:
a) Kontaktieren einer Phosphorverbindung und einer Vanadiumverbindung in einem organischen Lösungsmittel unter Konditionen, die einen Katalytvorläufer liefern, der ein Phosphor zu Vanadium Atomverhältnis zwischen 0,9 bis 1,4 aufweist und mehr als 90 Atomprozent von Vanadium im tetravalenten Zustand aufweist;
b) Zurückgewinnen des Vorläufers;
c) Trocknen des Vorläufers, Begrenzen der Höchsttemperatur in einer Sauerstoff enthaltenden Atmosphäre auf einen Wert, der nicht wesentlich die übriggebliebenen organischen Materialien oxidiert, die aus dem benutzten organischen Lösungsmittel stammen;
d) Vorsehen einer Atmosphäre ausgewählt aus der Gruppe, bestehend aus Luft, Dampf, Inertgasen und deren Mischungen, Kalzinieren des Vorläufers in der genannten Atmosphäre durch Anheben der Temperatur, wie im Vorläufer gemessen über diejenige, der er im Schritt c) ausgesetzt war, in einer Rate von weniger als 1°C pro Minute bis zu einer Temperatur höher als 350°C, aber nicht größer als 550°C, und Aufrechterhalten der Temperatur über einen Zeitraum der wirksam ist, um einen Vanadiumoxidationsstatus nicht größer als +4,5 zu geben und um die Umwandlung zu komplettieren, um einen aktiven Katalysator zu erzeugen.

20. Verfahren nach Anspruch 19, bei dem die maximale Temperatur der Trocknung im Schritt c) niedriger als 250°C ist in einer Sauerstoff enthaltenden Atmosphäre.

21. Verfahren nach Anspruch 19, bei dem die maximale Temperatur der Trocknung im Schritt c) 150°C bis 200°C in einer Sauerstoff enthaltenden Atmosphäre beträgt.

22. Verfahren nach Anspruch 19, bei dem die Rate des Temperaturanstieges im Schritt d) zwischen 0,5°C/Minute und weniger als 1°C/Minute beträgt.

23. Verfahren nach Anspruch 19, bei dem die Temperatur des Vorläufers im Schritt d) angehoben wird auf 350°C bis ungefähr 450°C.

24. Verfahren nach Anspruch 19, bei dem die Temperatur des Vorläufers angehoben wird im Schritt d) auf 375°C bis ungefähr 430°C.

25. Verfahren nach Anspruch 19, bei dem die Gasatmosphäre im Schritt c) einen Anteil an Sauerstoff enthält größer als 0 Vol.-%, aber nicht größer als 15 Vol.-%.

26. Verfahren nach Anspruch 19, bei dem die Gasatmosphäre im Schritt c) und/oder im Schritt d) einen Anteil an Sauerstoff enthält größer als 0 Vol.-%, aber nicht größer als 15 Vol.-%.

27. Verfahren nach Anspruch 19, bei dem die Gasatmosphäre im Schritt c) und/oder im Schritt d) einen Anteil an Sauerstoff enthält größer als 0 Vol.-%, aber nicht größer als 10 Vol.-%.

28. Verfahren nach Anspruch 19, bei dem die Gasatmosphäre im Schritt c) und/oder im Schritt d) Sauerstoff enthält von 5 Vol.-%.

29. Verfahren nach Anspruch 19, bei dem die Gasatmosphäre im Schritt d) einen Anteil an Dampf enthält größer als 0 Vol.-%, aber nicht größer als 75 Vol.-%.

30. Verfahren nach Anspruch 19, bei dem die Gasatmosphäre im Schritt d) einen Anteil an Dampf enthält größer als 0 Vol.-%, aber nicht größer als 50 Vol.-%.

31. Verfahren nach Anspruch 19, bei dem die Gasatmosphäre im Schritt d) Dampf enthält von ungefähr 50 Vol.-%.

32. Verfahren nach Anspruch 19, bei dem der zurückgewonnene Vorläufer im Schritt b) in Strukturen für Multirohrreaktoren vor dem Trockenschritt c) und dem Kalzinierungsschritt d) geformt wird.

33. Verfahren nach Anspruch 19, bei dem der zurückgewonnene Vorläufer in Flüssigspaltstoff- und Transportreaktoren vor dem Trocknungsschritt c) und dem Kalzinierungsschritt d) für den Gebrauch in Wirbelschicht- und Transportreaktoren der Größe nach geordnet wird.

34. Verfahren nach Anspruch 19, bei dem der zurückgewonnene Vorläufer im Schritt b) vor der Formung in Strukturen für Multirohrreaktoren getrocknet und kalziniert wird.

35. Verfahren nach Anspruch 19, bei dem der zurückgewonnene Vorläufer im Schritt b) vor der Größensortierung zum Gebrauch in Wirbelschicht- oder Transportreaktoren getrocknet und kalziniert wird.

## Revendications

1. Procédé de préparation de catalyseurs d'oxydation contenant des oxydes mixtes de vanadium et de phosphore, qui comprend :
(a) la mise en contact d'un composé de phosphore et d'un composé de vanadium dans un solvant organique sous des conditions qui permettent d'obtenir un précurseur de catalyseur ayant un rapport atomique du phosphore au vanadium se situant entre 0,9 et 1,4 et ayant plus de 90 % du vanadium à l'état tétravalent;
(b) la récupération du précurseur;
(c) le séchage du précurseur en limitant la température maximale dans une atmosphère contenant de l'oxygène à une valeur qui n'oxydera pratiquement pas les matières organiques résiduelles provenant du solvant organique utilisé;
(d) la présence d'une atmosphère choisie dans le groupe comprenant l'air, la vapeur, les gaz inertes et leurs mélanges et la calcination du précurseur, dans ladite atmosphère, en élevant la température, telle que mesurée dans le précurseur, au-dessus de celle atteinte à l'étape (c) à raison de moins de 1°C par minute jusqu'à une température supérieure à 350°C mais pas plus élevée que 550°C et en maintenant la température pendant une période de temps nécessaire pour donner un état d'oxydation du vanadium pas plus grand que 4,5 et effectuer la conversion pour produire un catalyseur actif.

2. Procédé suivant la revendication 1, caractérisé en ce que la température maximale de séchage dans l'étape (c) est inférieure à 250°C dans une atmosphère contenant de l'oxygène.

3. Procédé suivant la revendication 1, caractérisé en ce que la température maximale de séchage de l'étape (c) est d'environ 150°C à 200°C dans une atmosphère contenant de l'oxygène.

4. Procédé suivant la revendication 1, caractérisé en ce que la vitesse d'élévation de la température de l'étape (d) se situe entre 0,5°C/minute et moins de 1°C/minute.

5. Procédé suivant la revendication 1, caractérisé en ce que la température du précurseur est élevée dans l'étape (d) à une valeur de 350°C à 450°C.

6. Procédé suivant la revendication 1, caractérisé en ce que la température du précurseur est élevée dans l'étape (d) à une valeur de 375°C à 430°C.

7. Procédé suivant la revendication 1, caractérisé en ce que l'atmosphère gazeuse dans l'étape (c) contient plus de 0 % en volume mais pas plus de 15 % en volume d'oxygène.

8. Procédé suivant la revendication 1, caractérisé en ce que les atmosphères gazeuses dans l'étape (c) et/ou l'étape (d) contiennent plus de 0 % mais pas plus de 15 % en volume d'oxygène.

9. Procédé suivant la revendication 1, caractérisé en ce que les atmosphères gazeuses dans l'étape (c) et/ou l'étape (d) contiennent plus de 0 % mais pas plus de 10 % en volume d'oxygène.

10. Procédé suivant la revendication 1, caractérisé en ce que les atmosphères gazeuses dans l'étape (c) et/ou l'étape (d) contiennent 5 % en volume d'oxygène.

11. Procédé suivant la revendication 1, caractérisé en ce que l'atmosphère gazeuse dans l'étape (d) contient plus de 0 % mais pas plus de 75 % en volume de vapeur.

12. Procédé suivant la revendication 1, caractérisé en ce que l'atmosphère gazeuse dans l'étape (d) contient plus de 0 % mais pas plus de 50 % en volume de vapeur.

13. Procédé suivant la revendication 1, caractérisé en ce que l'atmosphère gazeuse dans l'étape (d) contient 50 % en volume de vapeur.

14. Procédé suivant la revendication 1, caractérisé en ce que le précurseur récupéré dans l'étape (b) est façonné en structures pour réacteurs multitubulaires avant l'étape de séchage (c) et l'étape de calcination (d).

15. Procédé suivant la revendication 1, caractérisé en ce que le précurseur récupéré dans l'étape (b) est dimensionné pour être utilisé dans des réacteurs à lit fluidisé et à lit transporté avant l'étape de séchage (c) et l'étape de calcination (d).

16. Procédé suivant la revendication 1, caractérisé en ce que le précurseur récupéré dans l'étape (b) est séché et calciné avant d'être façonné en structures pour réacteurs multitubulaires.

17. Procédé suivant la revendication 1, caractérisé en ce que le précurseur récupéré dans l'étape (b) est séché et calciné avant d'être dimensionné pour être utilisé dans des réacteurs à lit fluidisé et à lit transporté.

18. Catalyseur d'oxyde mixte de vanadium et de phosphore pour l'oxydation d'hydrocarbures réalisé par le procédé suivant l'une quelconque des revendications 1 à 17.

19. Procédé de production d'anhydride maléique par l'oxydation d'un hydrocarbure aliphatique avec de l'oxygène moléculaire ou un gaz contenant de l'oxygène moléculaire en phase vapeur à une température de 300°C à 550°C en présence d'un catalyseur d'oxyde mixte de vanadium et de phosphore avec ou sans agents modifiants, caractérisé en ce que le catalyseur est préparé par les étapes suivantes :
(a) la mise en contact d'un composé de phosphore et d'un composé de vanadium dans un solvant organique sous des conditions qui permettent d'obtenir un précurseur de catalyseur ayant un rapport atomique du phosphore au vanadium se situant entre 0,9 et 1,4 et ayant plus de 90 % du vanadium à l'état tétravalent;
(b) la récupération du précurseur;
(c) le séchage du précurseur en limitant la température maximale dans une atmosphère contenant de l'oxygène à une valeur qui n'oxydera pratiquement pas les matières organiques résiduelles provenant du solvant organique utilisé;
(d) la présence d'une atmosphère choisie dans le groupe comprenant l'air, la vapeur, les gaz inertes et leurs mélanges et la calcination du précurseur, dans ladite atmosphère, en élevant la température, telle que mesurée dans le précurseur, au-dessus de celle atteinte à l'étape (c) à raison de moins de 1°C par minute jusqu'à une température supérieure à 350°C mais pas plus élevée que 550°C et en maintenant la température pendant une période de temps nécessaire pour donner un état d'oxydation du vanadium pas plus grand que 4,5 et effectuer la conversion pour produire un catalyseur actif.

20. Procédé suivant la revendication 19, caractérisé en ce que la température maximale de séchage de l'étape (c) est inférieure à 250°C dans une atmosphère contenant de l'oxygène.

21. Procédé suivant la revendication 19, caractérisé en ce que la température maximale de séchage de l'étape (c) est de 150°C à 200°C dans une atmosphère contenant de l'oxygène.

22. Procédé suivant la revendication 19, caractérisé en ce que l'élévation de la vitesse de température de l'étape (d) se situe entre 0,5°C/minute et moins de 1°C/minute.

23. Procédé suivant la revendication 19, caractérisé en ce que la température du précurseur est élevée dans l'étape (d) à une valeur de 350°C à 450°C.

24. Procédé suivant la revendication 19, caractérisé en ce que la température du précurseur est élevée dans l'étape (d) à une valeur de 375°C à 430°C.

25. Procédé suivant la revendication 19, caractérisé en ce que l'atmosphère gazeuse dans l'étape (c) contient plus de 0 % en volume mais pas plus de 15 % en volume d'oxygène.

26. Procédé suivant la revendication 19, caractérisé en ce que les atmosphères gazeuses dans l'étape (c) et/ou l'étape (d) contiennent plus de 0 % mais pas plus de 15 % en volume d'oxygène.

27. Procédé suivant la revendication 19, caractérisé en ce que les atmosphères gazeuses dans l'étape (c) et/ou l'étape (d) contiennent plus de 0 % mais pas plus de 10 % en volume d'oxygène.

28. Procédé suivant la revendication 19, caractérisé en ce que les atmosphères gazeuses dans l'étape (c) et/ou l'étape (d) contiennent 5 % en volume d'oxygène.

29. Procédé suivant la revendication 19, caractérisé en ce que l'atmosphère gazeuse dans l'étape (d) contient plus de 0 % mais pas plus de 75 % en volume de vapeur.

30. Procédé suivant la revendication 19, caractérisé en ce que l'atmosphère gazeuse dans l'étape (d) contient plus de 0 % mais pas plus de 50 % en volume de vapeur.

31. Procédé suivant la revendication 19, caractérisé en ce que l'atmosphère gazeuse dans l'étape (d) contient 50 % en volume de vapeur.

32. Procédé suivant la revendication 19, caractérisé en ce que le précurseur récupéré dans l'étape (b) est façonné en structures pour réacteurs multitubulaires avant l'étape de séchage (c) et l'étape de calcination (d).

33. Procédé suivant la revendication 19, caractérisé en ce que le précurseur récupéré dans l'étape (b) est dimensionné pour être utilisé dans des réacteurs à lit fluidisé et à lit transporté avant l'étape de séchage (c) et l'étape de calcination (d).

34. Procédé suivant la revendication 19, caractérisé en ce que le précurseur récupéré dans l'étape (b) est séché et calciné avant d'être façonné en structures pour réacteurs multitubulaires.

35. Procédé suivant la revendication 19, caractérisé en ce que le précurseur récupéré dans l'étape (b) est séché et calciné avant d'être dimensionné pour être utilisé dans des réacteurs à lit fluidisé et à lit transporté.
